# EUROPÄISCHE PATENTSCHRIFT

(11) **EP 1 506 847 B1**
(45) Veröffentlichungstag und Bekanntmachung des Hinweises auf die Patenterteilung: **19.07.2006**
(21) Anmeldenummer: 03018350.3
(22) Anmeldetag: 13.08.2003
(51) Int. Cl.: B25F 5/00, B25D 16/00

(54) **Handwerkzeugmaschine**
Power tool
Outil portable motorisé

(43) Veröffentlichungstag der Anmeldung: 16.02.2005
(73) Patentinhaber: A & M Electric Tools GmbH, 71364 Winnenden (DE)
(72) Erfinder: Geis, Wilhelm, Dipl.-Ing. FH, 71397 Leutenbach (DE); Felger, Reiner, Dipl.-Ing. BA, 71404 Korb (DE); König, Peter, 73663 Berglen (DE)
(74) Vertreter: Riedel, Peter

(56) Entgegenhaltungen:
- US-A- 4 710 071

## Beschreibung

Die Erfindung betrifft eine Handwerkzeugmaschine der im Oberbegriff des Anspruchs 1 angegebenen Gattung.

Es ist bekannt, bei Handwerkzeugmaschinen einen Schaltgriff, beispielsweise zum Umschalten von einem Gang des Getriebes in den anderen, vorzusehen. Bei bekannten Schaltgriffen ist zur axialen Sicherung des Schaltgriffs ein Halteblech vorgesehen, das in eine Nut des Schaltgriffs ragt. Zur Definition der Schaltpositionen kann an dem Schaltgriff eine Nase oder dergleichen angeformt sein, die in der Schaltposition in eine Aussparung im Gehäuse ragt. Bei zunehmendem Verschleiß an der Nase kann sich der Schaltgriff im Betrieb aus der Schaltstellung lösen. Der Bediener spürt beim Umschalten kaum, wann die Schaltposition erreicht ist, so daß ein sicheres Umschalten nicht gewährleistet ist.

Aus der US 4,710,071 ist eine elektrische Bohrmaschine bekannt, die einen Schaltgriff zum Umschalten zwischen zwei Getriebestufen besitzt. Der Schaltgriff ist über ein Federelement in seinen Rastpositionen gehalten. Das Federelement wirkt dabei mit einer Nockenkontur des Schaltgriffs zusammen. Federelement und Nockenkontur sind symmetrisch ausgebildet.

Der Erfindung liegt die Aufgabe zugrunde, eine Handwerkzeugmaschine der gattungsgemäßen Art zu schaffen, die einen einfachen Aufbau besitzt und die bediensicher ist.

Diese Aufgabe wird durch eine Handwerkzeugmaschine mit den Merkmalen des Anspruchs 1 gelöst.

Das Federelement wirkt mit der Nockenkontur zusammen und definiert eine Rastposition des Schaltgriffs. Durch die Federwirkung kann sichergestellt werden, daß der Schaltgriff in der Rastposition sicher gehalten ist. Gleichzeitig spürt der Bediener deutlich, wann die Rastposition erreicht ist. Der Verschleiß ist minimiert, so daß die Rastposition auch nach vielen Schaltvorgängen noch sicher definiert ist. Über die Auslegung der Feder und die Ausbildung der Nockenkontur läßt sich die benötigte Schaltkraft anpassen, so daß eine bedienerfreundliche Benutzung gewährleistet werden kann und gleichzeitig ein selbsttätiges Ausrasten des Schaltgriffs aus der Rastposition im Betrieb der Handwerkzeugmaschine sicher vermieden werden kann.

Vorteilhaft ist die Nockenkontur in einer senkrecht zur Drehachse des Schaltgriffs verlaufenden Nut ausgebildet. Dadurch, daß das Federelement in die Nut ragt und mit der Nockenkontur zusammenwirkt, ist der Schaltgriff über das Federelement axial gesichert. Eine zusätzliche Sicherung des Schaltgriffs ist nicht notwendig, so daß die Anzahl der benötigten Bauteile gering ist. Das Federelement drückt zweckmäßig in einer Richtung senkrecht zur Drehachse des Schaltgriffs gegen die Nockenkontur. Vorteilhaft ist das Federelement im wesentlichen U-förmig ausgebildet. Das Federelement liegt dabei insbesondere auf gegenüberliegenden Seiten der Drehachse mit jeweils einem Rastnocken an der Nockenkontur an. Hierdurch ergibt sich eine einfache Ausgestaltung des Federelements.

Dadurch, daß das Federelement von beiden Seiten gegen die Nockenkontur drückt, heben sich die Kräfte der beiden Schenkel des Federelements weitgehend auf, so daß die Kräfte auf die Lagerung des Schaltgriffs minimiert sind. Um eine gute Definition der Rastposition zu erreichen, ist vorgesehen, daß das Federelement in einer Rastposition des Schaltgriffs in einer Rastvertiefung an der Nockenkontur anliegt. Durch die Anordnung der Rastposition in einer Vertiefung dreht sich der Schaltgriff nach Überdrehen einer bestimmten Stellung selbsttätig aufgrund der Federkräfte in die Rastposition. Hierdurch kann sichergestellt werden, daß die Rastposition vollständig erreicht wird, selbst wenn der Bediener den Schaltgriff nicht bis in die Rastposition dreht.

Zweckmäßig besitzt die Nockenkontur auf der der Rastvertiefung gegenüberliegenden Seite einen Rücken, der eben oder konvex ausgebildet ist. Das Federelement liegt dadurch in einer Rastposition mit einem Rastnocken in einer Rastvertiefung und mit einem Rastnocken an einem Rücken an. Dadurch kann sichergestellt werden, daß das zum Lösen erforderliche Drehmoment in beiden Rastpositionen gleich ist. Aufgrund der Geometrie von Rastnocken und Rastvertiefung kann es in einer Drehrichtung zur Selbsthemmung des Rastnockens in der Rastvertiefung kommen. Dadurch, daß jeweils ein Rastnocken am Rücken anliegt, ist eine Selbsthemmung beider Rastnocken vermieden und es kann sichergestellt werden, daß eine Drehung nur in einer Richtung möglich ist. Das Federelement erstreckt sich vorteilhaft im wesentlichen in einer Ebene senkrecht zur Drehachse des Schaltgriffs.

Es ist vorgesehen, daß mit dem Schaltgriff ein Bolzen verbunden ist, der zur Drehachse des Schaltgriffs exzentrisch angeordnet ist. Der Bolzen dient dabei zum Schalten. Insbesondere besitzt die Handwerkzeugmaschine ein Getriebe mit mindestens zwei Gängen und der Bolzen schaltet das Getriebe. Vorteilhaft ist das Federelement in einer Tasche im Gehäuse angeordnet. Hierdurch sind keine zusätzlichen Bauteile zur Fixierung des Fixierelements notwendig. Die Tasche ist dabei insbesondere so ausgebildet, daß sie das Federelement in Richtung der Drehachse fixiert. Die Tasche ist zweckmäßig im wesentlichen U-förmig ausgebildet und besitzt einen Mittelsteg, in dem der Schaltgriff gelagert ist. Der Mittelsteg hält das Federelement dabei vorteilhaft in einer Richtung senkrecht zur Drehachse des Schaltgriffs.

Eine einfache Ausgestaltung des Federelements ergibt sich, wenn das Federelement aus Federdraht gebogen ist. Zweckmäßig besitzt der Schaltgriff zwei Rastpositionen, die zueinander um etwa 180° um die Drehachse gedreht sind.

Ausführungsbeispiele der Erfindung werden im folgenden anhand der Zeichnung erläutert. Es zeigen:
- Fig. 1: eine perspektivische Darstellung einer Bohrmaschine,
- Fig. 2: einen Längsschnitt durch den Getriebekasten der Bohrmaschine,
- Fig. 3: einen Schnitt entlang der Linie III-III in Fig. 2,
- Fig. 4: einen Schnitt entlang der Linie IV-IV in Fig. 3,
- Fig. 5: einen Schnitt entlang der Linie V-V in Fig. 4,
- Fig. 6: einen Schaltgriff mit einem Federelement in Schnittdarstellung,
- Fig. 7: das Federelement aus Fig. 6 in Draufsicht,
- Fig. 8: einen Schnitt durch die Nut des Schaltgriffs aus Fig. 6.

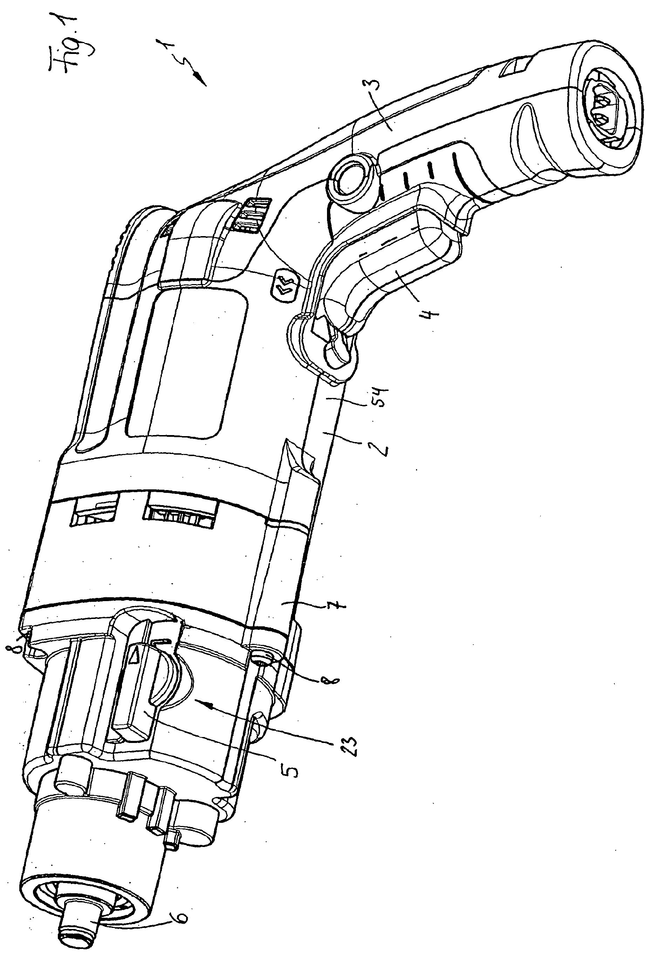

Die in Fig. 1 dargestellte Bohrmaschine 1 besitzt ein Gehäuse 2, in dem ein Elektromotor zum Antrieb einer Spindel 6 angeordnet ist. Am Gehäuse 2 ist ein Griff 3 angeformt, der einen Bedienhebel 4 zur Bedienung der Bohrmaschine 1 besitzt. Das Gehäuse 2 besitzt einen Getriebekasten 7, der über drei Schrauben 8, von denen zwei in Fig. 1 gezeigt sind, an einem dritten Gehäuseabschnitt 54 festgelegt ist. Am Getriebekasten 7 ist ein Schaltgriff 5 zur Umschaltung der Gänge eines im Gehäuse 2 angeordneten Zweiganggetriebes vorgesehen. In Fig. 1 ist der Schaltgriff 5 in einer ersten Rastposition 23 angeordnet. Durch Drehen des Schaltgriffs um 180° kann eine zweite Rastposition des Schaltgriffs erreicht werden.

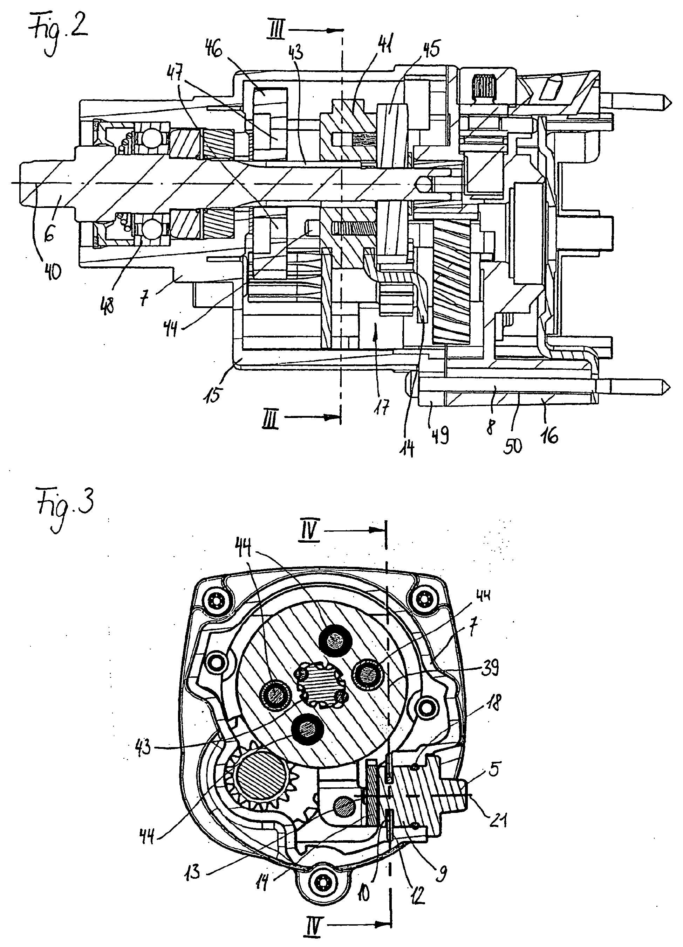

Fig. 2 zeigt einen Schnitt durch den Getriebekasten 7. Der Getriebekasten 7 ist aus einem ersten Gehäuseabschnitt 15, in dem die Spindel 6 mit einem Lager 48 gelagert ist, und einem zweiten Gehäuseabschnitt 16 zusammengesetzt. Die Gehäuseabschnitte 15 und 16 sind über die Schrauben 8 miteinander verbunden, die an einem Flansch 49 am ersten Gehäuseabschnitt 15 anliegen und durch eine Durchgangsbohrung 50 im zweiten Gehäuseabschnitt 16 zum dritten Gehäuseabschnitt 54 des Gehäuses 2 ragen. Im Getriebekasten 7 ist das Getriebe 17 gelagert, über das die Spindel 6 um ihre Drehachse 40 rotierend angetrieben ist. Das Getriebe 17 besitzt ein erstes Zahnrad 45 und ein zweites Zahnrad 46, die voneinander beabstandet auf der Spindel 6 drehbar gelagert sind. Zwischen den Zahnrädern 45, 46 ist die Schaltscheibe 41 angeordnet, die über eine Verzahnung 43 drehfest mit der Spindel 6 verbunden ist. Die Schaltscheibe 41 ist in Richtung der Drehachse 40 der Spindel 6 zwischen den Zahnrädern 45 und 46 beweglich. Die Schaltscheibe 41 besitzt vier Mitnahmestifte 44 (Fig. 3), von denen in der in Fig. 2 gezeigten ersten Schaltstellung zwei in Bohrungen im ersten Zahnrad 45 ragen und in der zweiten Schaltstellung, in der die Schaltscheibe 41 am zweiten Zahnrad 46 anliegt, zwei in Bohrungen 47 im zweiten Zahnrad 46 ragen. Die Schaltscheibe 41 kann über ein Schaltelement 14 zwischen den beiden Schaltstellungen verschoben werden.

Wie Fig. 3 zeigt, ist das Schaltelement 14 über den Schaltgriff 5 schaltbar. Der Schaltgriff 5 ist am Getriebekasten 7 des Gehäuses 2 um seine Drehachse 21 schwenkbar gelagert. Der Schaltgriff 5 besitzt hierzu einen Zapfen 9, der zylindrisch ausgebildet ist und der in einer zylindrischen Bohrung im Getriebekasten 7 gelagert ist. Zwischen der Nut 10 und der Gehäuseaußenseite ist am Zapfen 9 eine Dichtung 18 angeordnet, die das Gehäuseinnere gegen das Gehäuseäußere abdichtet. Am Zapfen 9 ist ein Bolzen 13 exzentrisch zur Drehachse 21 angeordnet. Der Bolzen 13 ragt durch eine Bohrung im Schaltelement 14. Durch Drehen des Schaltgriffs 5 wird das Schaltelement 14 durch den Bolzen 13 in Richtung der Drehachse 40 der Spindel 6 bewegt und verschiebt die Schaltscheibe 41 zwischen den beiden Zahnrädern 45 und 46. Der Schaltgriff 5 besitzt zwei Rastpositionen, wobei in der ersten Rastposition die Schaltscheibe 41 am zweiten Zahnrad 46 anliegt und in der zweiten Rastposition am ersten Zahnrad 45. Zur Definition der Rastpositionen besitzt der Schaltgriff 5 eine Nut 10, in der ein Federelement 12 angeordnet ist. Das Federelement 12 erstreckt sich dabei im wesentlichen in einer Ebene 39 senkrecht zur Drehachse 21 des Schaltgriffs 5.

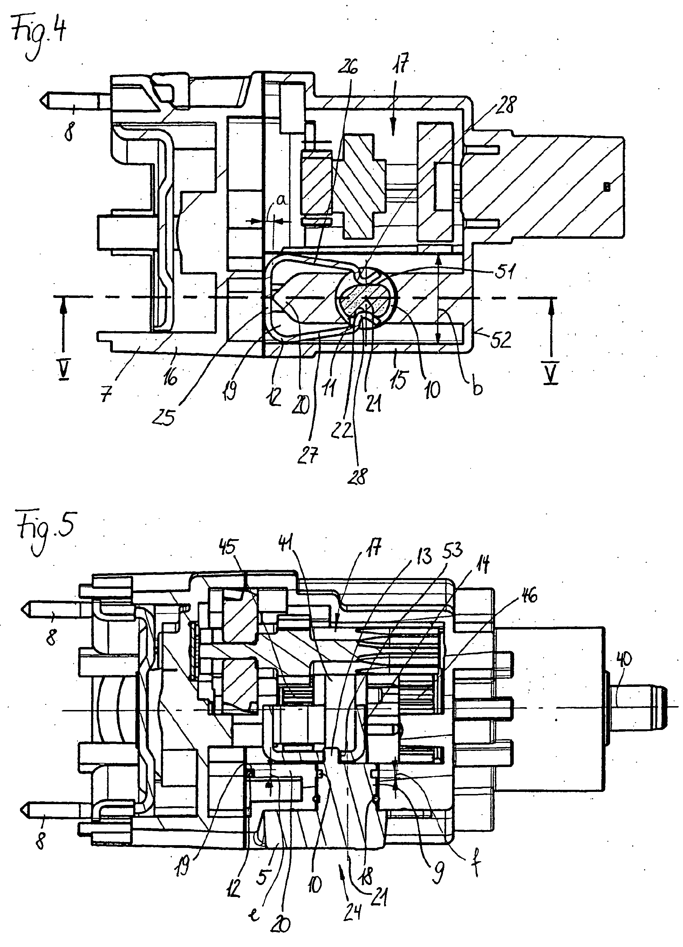

Fig. 4 zeigt einen Schnitt durch den Getriebekasten 7 auf der Höhe der Ebene 39. Am Nutgrund der Nut 10 ist eine Nockenkontur 11 ausgebildet, die einen etwa nierenförmigen Querschnitt besitzt. An der Nockenkontur 11 liegt das Federelement 12 an. Das Federelement 12 ist etwa U-förmig ausgebildet und besitzt einen Steg 25, der zwischen den beiden Schenkeln 26 und 27 des Federelements 12 angeordnet ist. An den Schenkeln 26 und 27 ist jeweils ein Rastnocken 28 angeformt, der auf der an der Nockenkontur 11 anliegenden Seite konvex ausgebildet ist. Die beiden Schenkel 26 und 27 des Federelements 12 verlaufen ausgehend vom Steg 25 bis zu den Rastnocken 28 gerade und aufeinander zu. Die beiden Schenkel 26 und 27 des Federelements 12 drücken die beiden Rastnocken 28 in Richtung auf die Drehachse 21 an die Nockenkontur 11 an. Die Nockenkontur 11 besitzt eine Rastvertiefung 22, in der in einer Rastposition ein Rastnocken 28 anliegt. Der zweite Rastnocken 28 liegt an dem gegenüberliegenden Rücken 51 der Nockenkontur 11 an, der konvex ausgebildet ist. Hierdurch ist eine Selbsthemmung der Rastnocken 28 in der Nockenkontur 11 vermieden und es ergeben sich zum Lösen aus beiden Rastpositionen gleiche Bedienkräfte. Aufgrund der Selbsthemmung ist aus der in Fig. 4 gezeigten Stellung nur eine Drehung entgegen dem Uhrzeigersinn möglich, da der Rastnocken 28 in Gegenrichtung in der Rastvertiefung 22 gehemmt ist und blockiert.

Das Federelement 12 ist in einer Tasche 19 im ersten Gehäuseabschnitt 15 gehalten. Die Tasche 19 ist U-förmig ausgebildet. Von der dem Griff 3 abgewandten Gehäusevorderseite 52 erstreckt sich in der Tasche 19 ein Mittelsteg 20 in Richtung auf den zweiten Gehäuseabschnitt 16. Der Mittelsteg 20 besitzt zum zweiten Gehäuseabschnitt 16 einen Abstand a, der etwa der Erstreckung des Stegs 25 des Federelements 12 in diesem Bereich entspricht. Das Federelement 12 ist somit in Richtung der Drehachse 40 der Spindel 6 und senkrecht zur Drehachse 21 des Schaltgriffs 5 zwischen dem Mittelsteg 20 und dem zweiten Gehäuseabschnitt 16 gehalten. Die in der Ebene 39 senkrecht zum Abstand a gemessene Erstreckung b der Tasche 19 entspricht ebenfalls der Erstreckung des Federelements 12 in dieser Richtung, so daß das Federelement 12 in der Ebene 39 in der Tasche 19 gehalten ist. Im Mittelsteg 20 ist der Zapfen 9 des Schaltgriffs 5 gelagert.

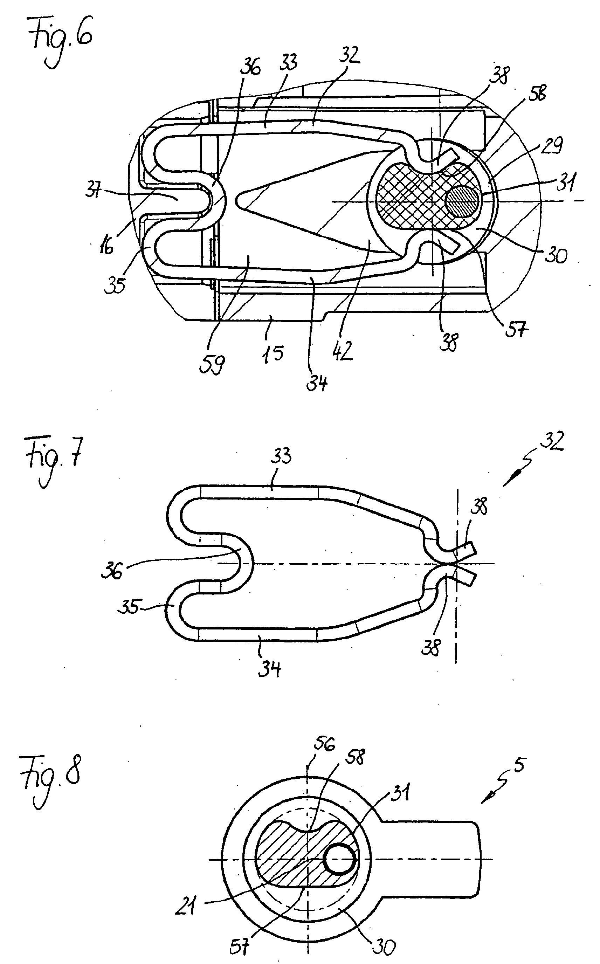

Wie der Schnitt in Fig. 5 zeigt, entspricht die in Richtung der Drehachse 21 des Schaltgriffs 5 gemessene Höhe e der Feder 12 etwa der in Richtung der Drehachse 21 gemessenen Höhe f der Nut 10. Das Federelement 12 ist in der Tasche 19 in Richtung der Drehachse 21 fixiert. Über die Nut 10 ist der Schaltgriff 5 durch das Federelement 12 in Richtung der Drehachse 21 am Gehäuse 2 der Bohrmaschine 1 gehalten. In Fig. 5 ist der Schaltgriff 5 in der zweiten Rastposition 24 gezeigt, in der sich der Schaltgriff 5 an der Gehäuseaußenseite von der Drehachse 21 im wesentlichen in Richtung auf den Griff 3 der Bohrmaschine 1 erstreckt. Die erste, in Fig. 1 gezeigte Rastposition 23 des Schaltgriffs 5 ist gegenüber der zweiten, in Fig. 5 gezeigten Rastposition 24 um 180° um die Drehachse 21 gedreht. Der Bolzen 13 ist exzentrisch zur Drehachse 21 gelagert und ragt durch eine Bohrung 53 im Schaltelement 14.

Die Fig. 6 bis 8 zeigen ein Ausführungsbeispiel eines Federelements 32 und einer Nockenkontur 31. In Fig. 6 ist das Federelement 32 in einer Tasche 59 des Gehäuses der Bohrmaschine 1 angeordnet. Die Tasche 59 ist dabei im Bereich des ersten Gehäuseabschnitts 15 ausgebildet und erstreckt sich bis in den zweiten Gehäuseabschnitt 16. Das Federelement 32 besitzt in eingebautem Zustand eine im wesentlichen U-förmige Gestalt mit einem Steg 35, an den sich zwei Schenkel 33 und 34 anschließen. Die beiden Schenkel 33 und 34 erstrecken sich beidseitig zu einem Mittelsteg 42, in dem der Zapfen 29 des Schaltgriffs 5 drehbar gelagert ist. An den Schenkeln 33 und 34 sind Rastnocken 38 angeordnet, die an einer Nockenkontur 31 des Schaltgriffs 5 anliegen. Die Nockenkontur 31 ist dabei in einer umlaufenden Nut 30 im Zapfen 29 des Schaltgriffs 5 ausgebildet. Der Steg 35 des Federelements 32 besitzt eine Biegung 36 in Richtung auf die Rastnocken 38. In die Biegung 36 ragt ein Quersteg 37 des zweiten Gehäuseabschnitts 16 und fixiert so das Federelement 32 in seiner Lage.

In Fig. 7 ist das Federelement 32 in ungespanntem Zustand gezeigt. Die beiden Rastnocken 38 liegen in diesem Zustand aneinander an. Fig. 8 zeigt die Nockenkontur 31. Die Nockenkontur 31 besitzt einen etwa nierenförmigen Querschnitt, wobei an einer Seite der Nockenkontur 31 eine Rastvertiefung 58 ausgebildet ist und an der gegenüberliegenden Seite ein Rücken 57. Die Nockenkontur 31 ist symmetrisch zu einer Ebene 56, die die Drehachse 21 des Schaltgriffs 5 umfaßt. Der Rücken 57 ist eben ausgebildet und verläuft tangential zur Drehachse 21. Der Rücken 57 kann jedoch auch, wie der in Fig. 4 gezeigte Rücken 51, konvex ausgebildet sein.

In der in Fig. 6 gezeigten Rastposition liegt ein Rastnocken 38 in der Rastvertiefung 58 und der gegenüberliegende Rastnocken 38 am Rücken 57 an. Bei einer Drehung des Schaltgriffs 5 in Fig. 6 im Uhrzeigersinn wird der Rastnocken 38 aus der Rastvertiefung 58 gedrückt. Bei einer Drehung des Schaltgriffs in Gegenrichtung, also in Fig. 6 entgegen dem Uhrzeigersinn, blockiert der Rastnocken 38 in der Rastvertiefung 58 aufgrund der Selbsthemmung. Eine Drehung des Schaltgriffs 5 in dieser Richtung ist nicht möglich. Dadurch, daß die Rastvertiefung 58 symmetrisch ausgebildet ist, ergeben sich in den beiden um 180° zueinander gedrehten Rastpositionen gleiche Bedienkräfte zum Lösen der Verrastung.

Die Federelemente 12, 32 sind vorteilhaft aus Federdraht gebogen. Hierdurch ergibt sich eine einfache Herstellbarkeit und eine gute Federwirkung.

Die Handwerkzeugmaschine kann auch eine Schlagbohrmaschine oder eine andere Werkzeugmaschine, insbesondere eine Maschine mit einem Mehrganggetriebe, sein.

## Patentansprüche

1. Handwerkzeugmaschine mit einem Gehäuse (2), in dem ein Motor zum Antrieb eines Werkzeugs angeordnet ist, wobei am Gehäuse (2) ein Schaltgriff (5) um eine Drehachse (21) schwenkbar gelagert ist, wobei der Schaltgriff (5) eine Nockenkontur (11, 31) besitzt, die mit einem Federelement (12, 32) zusammenwirkt, wobei die Nockenkontur (11, 31) mit dem Federelement (12, 32) mindestens eine Rastposition (23, 24) des Schaltgriffs (5) definiert,
**dadurch gekennzeichnet daß**, das Federelement (12, 32) in einer Rastposition (23, 24) des Schaltgriffs (5) in einer Rastvertiefung (22, 58) an der Nockenkontur (11, 31) anliegt und die Nockenkontur (11, 31) auf der der Rastvertiefung (22, 58) gegenüberliegenden Seite einen Rücken (51, 57) besitzt, der eben oder konvex ausgebildet ist.

2. Handwerkzeugmaschine nach Anspruch 1,
**dadurch gekennzeichnet, daß** die Nockenkontur (11, 31) in einer senkrecht zur Drehachse (21) des Schaltgriffs (5) verlaufenden Nut (10, 30) ausgebildet ist.

3. Handwerkzeugmaschine nach Anspruch 1 oder 2,
**dadurch gekennzeichnet, daß** das Federelement (12, 32) in einer Richtung senkrecht zur Drehachse (21) des Schaltgriffs (5) gegen die Nockenkontur (11, 31) drückt.

4. Handwerkzeugmaschine nach einem der Ansprüche 1 bis 3,
**dadurch gekennzeichnet, daß** das Federelement (12, 32) im wesentlichen U-förmig ausgebildet ist.

5. Handwerkzeugmaschine nach einem der Ansprüche 1 bis 4,
**dadurch gekennzeichnet, daß** das Federelement (12, 32) auf gegenüberliegenden Seiten der Drehachse (21) mit jeweils einem Rastnocken (28, 38) an der Nockenkontur (11, 31) anliegt.

6. Handwerkzeugmaschine nach einem der Ansprüche 1 bis 5,
**dadurch gekennzeichnet, daß** das Federelement (12, 32) sich im wesentlichen in einer Ebene (39) senkrecht zur Drehachse (21) des Schaltgriffs (5) erstreckt.

7. Handwerkzeugmaschine nach einem der Ansprüche 1 bis 6,
**dadurch gekennzeichnet, daß** mit dem Schaltgriff (5) ein Bolzen (13) verbunden ist, der zur Drehachse (21) des Schaltgriffs (5) exzentrisch angeordnet ist.

8. Handwerkzeugmaschine nach Anspruch 7,
**dadurch gekennzeichnet, daß** die Handwerkzeugmaschine ein Getriebe (17) mit mindestens zwei Gängen besitzt und der Bolzen (13) das Getriebe (17) schaltet.

9. Handwerkzeugmaschine nach einem der Ansprüche 1 bis 8,
**dadurch gekennzeichnet, daß** das Federelement (12, 32) in einer Tasche (19, 59) im Gehäuse (2) angeordnet ist.

10. Handwerkzeugmaschine nach Anspruch 9,
**dadurch gekennzeichnet, daß** die Tasche (19, 59) im wesentlichen U-förmig ausgebildet ist und einen Mittelsteg (20, 42) besitzt, in dem der Schaltgriff (5) gelagert ist.

11. Handwerkzeugmaschine nach einem der Ansprüche 1 bis 10,
**dadurch gekennzeichnet, daß** das Federelement (12, 32) aus Federdraht gebogen ist.

12. Handwerkzeugmaschine nach einem der Ansprüche 1 bis 11,
**dadurch gekennzeichnet, daß** der Schaltgriff (5) zwei Rastpositionen (23, 24) besitzt, die zueinander um etwa 180° um die Drehachse (21) gedreht sind.

## Claims

1. Manual power tool, with a housing (2) in which is arranged a motor for powering a tool, with a selector switch (5) mounted to swivel on the housing (2) about a swivel axis (21), the selector switch (5) having a cam contour (11, 31) which co-operates with a spring element (12, 32) so that the cam contour (11, 31) with the spring element (12, 32) determine at least one set position (23, 24) of the selector switch (5),
**characterised in that** in a set position (23, 24) of the selector switch (5) the spring element (12, 32) rests in a detent recess (22, 58) on the cam contour (11, 31) and, on the side opposite the detent recess (22, 58), the cam contour (11, 31) has a face which is flat or convex.

2. Manual power tool according to Claim 1,
**characterised in that** the cam contour (11, 31) is formed in a groove (10, 30) which extends perpendicularly to the swivel axis (21) of the selector switch (5).

3. Manual power tool according to Claims 1 or 2,
**characterised in that** the spring element (12, 32) presses against the cam contour (11, 31) in a direction perpendicular to the swivel axis (21) of the selector switch (5).

4. Manual power tool according to any of Claims 1 to 3,
**characterised in that** the spring element (12, 32) is essentially U-shaped.

5. Manual power tool according to any of Claims 1 to 4,
**characterised in that** on the opposite side of the swivel axis (21) the spring element (12, 32) rests against the cam contour (11, 31) with a respective detent cam (28, 38).

6. Manual power tool according to any of Claims 1 to 5,
**characterised in that** the spring element (12, 32) extends essentially in a plane (39) perpendicular to the swivel axis (21) of the selector switch (5).

7. Manual power tool according to any of Claims 1 to 6,
**characterised in that** a stud (13) is connected to the selector switch (5), which is arranged eccentrically relative to the swivel axis (21) of the selector switch (5).

8. Manual power tool according to Claim 7,
**characterised in that** the manual power tool has a transmission (17) with at least two gear ratios and the stud (13) shifts the transmission.

9. Manual power tool according to any of Claims 1 to 8,
**characterised in that** the spring element (12, 32) is arranged in a pocket (19, 59) in the housing (2).

10. Manual power tool according to Claim 9,
**characterised in that** the pocket (19, 59) is essentially U-shaped and has a central web (20, 42) in which the selector switch (5) is mounted.

11. Manual power tool according to any of Claims 1 to 10,
**characterised in that** the spring element (12, 32) is formed of bent spring wire.

12. Manual power tool according to any of Claims 1 to 11,
**characterised in that** the selector switch (5) has two set positions (23, 24), rotated relative to one another by approximately 180.

## Revendications

1. Outil portable motorisé avec un carter (2), dans lequel est disposé un moteur pour l'entraînement d'un outil, une manette de changement de vitesse (5) étant logée sur le carter (2) de manière à pouvoir basculer autour d'un axe de rotation (21), la manette de changement de vitesse (5) présentant un contour de came (11, 31) qui coopère avec un élément de ressort (12, 32), le contour de came (11, 31) définissant avec l'élément de ressort (12, 32) au moins une position d'encliquetage (23,24) de la manette de changement de vitesse (5), **caractérisé en ce que** l'élément de ressort (12, 32) s'appuie dans une position d'encliquetage (23, 24) de la manette de changement de vitesse (5) dans une cavité d'encliquetage (22, 58) sur le contour de came (11, 31) et le contour de came (11, 31) présente sur le côté opposé à la cavité d'encliquetage (22, 58), un dos (51, 57) qui est réalisé de façon plane ou convexe.

2. Outil portable motorisé selon la revendication 1, **caractérisé en ce que** le contour de came (11, 31) est réalisé dans une rainure (10, 30) agencée perpendiculairement à l'axe de rotation (21) de la manette de changement de vitesse (5).

3. Outil portable motorisé selon la revendication 1 ou 2, **caractérisé en ce que** l'élément de ressort (12, 32) appuie dans une direction perpendiculairement à l'axe de rotation (21) de la manette de changement de vitesse (5) contre le contour de came (11, 31).

4. Outil portable motorisé selon l'une quelconque des revendications 1 à 3, **caractérisé en ce que** l'élément de ressort (12, 32) est conçu sensiblement en forme de U.

5. Outil portable motorisé selon l'une quelconque des revendications 1 à 4, **caractérisé en ce que** l'élément de ressort (12, 32) s'appuie sur des côtés opposés de l'axe de rotation (21) avec respectivement une came d'encliquetage (28, 38) sur le contour de came (11, 31).

6. Outil portable motorisé selon l'une quelconque des revendications 1 à 5, **caractérisé en ce que** l'élément de ressort (12, 32) s'étend sensiblement dans un plan (39) perpendiculairement à l'axe de rotation (21) de la manette de changement de vitesse (5).

7. Outil portable motorisé selon l'une quelconque des revendications 1 à 6, **caractérisé en ce qu'**un boulon (13), qui est disposé de façon excentrée par rapport à l'axe de rotation (21) de la manette de changement de vitesse (5), est relié à la manette de changement de vitesse (5).

8. Outil portable motorisé selon la revendication 7, **caractérisé en ce que** l'outil portable motorisé présente une transmission (17) avec au moins deux vitesses et le boulon (13) commute la transmission (17).

9. Outil portable motorisé selon l'une quelconque des revendications 1 à 8, **caractérisé en ce que** l'élément de ressort (12, 32) est exposé dans une poche (19, 59) dans le carter (2).

10. Outil portable motorisé selon la revendication 9, **caractérisé en ce que** la poche (19, 59) est réalisée sensiblement en forme de U et présente une nervure centrale (20, 42), dans laquelle est logée la manette de changement de vitesse (5).

11. Outil portable motorisé selon l'une quelconque des revendications 1 à 10, **caractérisé en ce que** l'élément de ressort (12, 32) est plié à partir de fil de ressort.

12. Outil portable motorisé selon l'une quelconque des revendications 1 à 11, **caractérisé en ce que** la manette de changement de vitesse (5) présente deux positions d'encliquetage (23,24) qui sont tournées l'une par rapport à l'autre d'environ 180 ° autour de l'axe de rotation (21).
